# FASCICULE DE BREVET EUROPEEN

(11) **EP 2 872 848 B1**
(45) Date de publication et mention de la délivrance du brevet: **23.10.2019**
(21) Numéro de dépôt: 13739961.4
(22) Date de dépôt: 12.07.2013
(51) Int. Cl.: F28D 9/00

(54) **ÉCHANGEUR THERMIQUE À PLAQUES**
PLATTENWÄRMETAUSCHER
PLATE HEAT EXCHANGER

(30) Priorité: 13.07.2012 FR 1256817
(43) Date de publication de la demande: 20.05.2015
(73) Titulaire: MAHLE International GmbH, 70376 Stuttgart (DE)
(72) Inventeur: BERGER, Thierry, F-57100 Thionville (FR); AYAD, Fadil, F-57685 Augny (FR); PROCHETTE, Bruno, F-54400 Longwy (FR)
(74) Mandataire: Cabinet Netter
(86) Numéro de dépôt international: PCT/EP2013/064812
(87) Numéro de publication internationale: WO 2014/009537

(56) Documents cités:
- EP-A1- 2 481 899
- EP-A2- 1 058 079
- EP-A2- 2 187 157
- DE-A1- 19 547 928
- DE-A1-102006 028 852
- DE-A1-102009 045 671
- FR-A1- 2 728 665
- FR-A1- 2 869 680
- FR-A1- 2 901 849
- JP-A- H1 163 881
- US-A- 5 720 341
- US-A1- 2004 154 331
- US-A1- 2005 067 156
- US-A1- 2008 264 609
- US-A1- 2010 032 148

## Description

### DOMAINE TECHNIQUE

La présente invention concerne un échangeur thermiques à plaques assemblées par paires, tel que connu de US5,720,341 et de EP2187157.

### ARRIERE-PLAN TECHNOLOGIQUE DE L'INVENTION

Dans un véhicule équipé d'un moteur turbo compressé, l'air d'alimentation est compressé avant d'être injecté. La compression engendre un échauffement important à plus de 200°C aussi, juste en amont du moteur, le flux d'air traverse-t-il un refroidisseur d'air de suralimentation (RAS) de sorte que la température de l'air est abaissée à moins de 80°C.

Cette température s'avère encore trop importante pour atteindre les performances souhaitées aujourd'hui. De plus les RAS doivent être le plus petit possible. Une nouvelle génération de RAS est donc attendue par le marché.

### RESUME DE L'INVENTION

La présente invention est un RAS dont les performances thermiques et dimensionnelles dépassent largement celles des RAS de l'art antérieur en proposant une solution simple et économique.

Dans ce but, l'invention propose un échangeur thermique à plaques assemblées par paires, chaque paire formant entre ses plaques un premier tube plat de circulation dans lequel circule un premier fluide entre un premier orifice d'entrée et un premier orifice de sortie.

Chaque paire de plaques forme entre ses plaques un deuxième tube plat de circulation dans lequel circule un deuxième fluide entre un deuxième orifice d'entrée et un deuxième orifice de sortie. Les deux tubes plats sont coplanaires et forment des branches parallèles s'étendant selon une direction longitudinale du plan commun, elle-même perpendiculaire à une direction transversale du même plan commun selon laquelle un flux d'air transversal traverse l'échangeur thermique en passant entre les paires de plaques. Le premier tube est en amont dans le flux d'air et le deuxième tube est en aval du flux d'air. Le flux d'air est donc d'abord en échange thermique avec le premier tube puis en échange thermique avec le deuxième tube. Ainsi, l'échangeur thermique présente l'avantage de combiner en une structure simple deux circuits d'échanges thermiques successifs ce qui permet d'optimiser l'échange avec le flux d'air traversant.

Au moins un des deux tubes de circulation a deux branches longitudinales parallèles reliées en leurs deux extrémités selon un 0, une des branches du 0 est en amont dans le flux d'air, c'est la branche amont, et l'autre branche du 0 est en aval, c'est la branche avale.

Les deux tubes peuvent-ils être réalisés selon un 00 ou les tubes peuvent être en U0.

Il est avantageux pour l'efficacité thermique de l'échangeur que l'orifice d'entrée d'un tube plat est agencé sur la branche avale et l'orifice de sortie soit agencé sur la branche amont.

De plus, les orifices d'entrée et de sortie sont agencés dans la zone centrale des branches et sont longitudinalement décalés l'un par rapport à l'autre de sorte que l'empilement des plaques ne créé entre l'entrée et la sortie de zone neutre non parcourue par le flux d'air transversal et dans laquelle le fluide ne serait pas refroidit.

Quel que soit le mode de réalisation, en U, 0 ou autres, dans le cas d'un échangeur dans lequel le flux d'air se refroidit et le premier et le deuxième fluide se réchauffent, il est avantageux pour optimiser les échanges thermiques que, mesurée dans le plan commun aux deux tubes plats et selon la direction transversale, la largeur de la branche longitudinale dans laquelle se trouve l'orifice d'entrée du fluide soit plus étroite que la largeur de la branche longitudinale du même tube dans laquelle se trouve l'orifice de sortie du fluide.

Inversement, dans le cas d'un échangeur dans lequel le flux d'air se réchauffe tandis que et le premier et le deuxième fluide se refroidissent la branche sur laquelle se trouve l'orifice d'entrée peut être plus large que la branche où se trouve l'orifice de sortie.

Les branches longitudinales d'un circuit en U ou en 0 sont séparées par une frontière longitudinale qui s'étend selon la direction longitudinale et qui est alors décentré de sorte qu'une des branches longitudinale soit plus étroite que l'autre. La frontière centrale peut également légèrement s'écarter de la direction longitudinale stricte. Par exemple, dans le cas d'un circuit en U, cette frontière peut être en biais de sorte qu'au niveau des orifices d'entrée et de sortie une des branche soit plus étroite que l'autre alors qu'à l'opposé, là où les branches se relient, les deux branches soient quasiment de même largeur. Similairement dans le cas d'un circuit en 0 avec orifices d'entrée et de sortie au centre des branches longitudinales du 0, la frontière entre les branches longitudinales peut former une ligne brisée de sorte qu'au niveau central des orifices une branche soit plus étroite que l'autre alors qu'aux deux extrémités les deux branches aient sensiblement la même largeur.

De plus l'échangeur thermique peut comprendre au moins deux paires de plaques entre lesquelles sont agencées des ailettes de refroidissements. Celles-ci sont orientées selon la direction transversale du flux d'air et, dans le cas d'un échangeur dans lequel le flux d'air se refroidit et le premier et le deuxième fluide se réchauffent il est avantageux pour optimiser les échanges thermiques que les ailettes amonts situées entre les premiers tubes, en amont dans le flux d'air, soient plus éloignées les unes des autres que les ailettes avales situées entre les deuxièmes tubes, en aval dans le flux d'air.

Inversement, dans un échangeur étant prévu pour réchauffer le flux d'air transversal tandis que le premier fluide et le deuxième fluide se refroidissent, les ailettes amonts situées entre les premiers tubes en amont dans le flux d'air sont plus proche les unes des autres que les ailettes avales situées entre les deuxièmes tubes, en aval dans le flux d'air.

Inversement, dans le cas d'un échangeur dans lequel le flux d'air se réchauffe tandis que et le premier et le deuxième fluide se refroidissent il est avantageux pour optimiser les échanges thermiques que les ailettes amonts situées entre les premiers tubes, en amont dans le flux d'air, là où le flux est le plus froid, soient moins espacées entre elles que les ailettes avales situées entre les deuxièmes tubes, en aval dans le flux d'air.

Selon une alternative, les deux tubes plats ont chacun a deux branches longitudinales parallèles reliées en leurs deux extrémités et forment ensemble un 00, les quatre orifices d'entrée et de sortie sont alors agencés dans la zone centrale des branches longitudinales en étant décalés l'un par rapport à l'autre de sorte que l'empilement des plaques ne créé entre les entrées et les sorties de zones neutres non parcourues par le flux d'air transversal et dans lesquelles le fluide ne serait pas refroidit.

De plus, les tubes plats dans lesquels circulent les fluides sont pourvus de perturbateurs de flux destinés à améliorer les échanges thermiques, perturbateurs qui sont plus éloignés les uns des autres à proximité de l'orifice d'entrée qu'ils ne le sont à proximité de l'orifice de sortie. Plus particulièrement, la densité des perturbateurs de flux le long des tubes plats augmente régulièrement entre l'orifice d'entrée et l'orifice de sortie.

Selon un arrangement spécifique, les perturbateurs de flux sont groupés en set de plusieurs perturbateurs alignés transversalement au sens d'écoulement du fluide de sorte à former un obstacle plus difficilement franchissable par un fluide et a donc obliger le fluide à un parcours en zig-zag. Dans ce cas, les sets sont plus éloignés les uns des autres à proximité de l'orifice d'entrée qu'ils ne le sont à proximité de l'orifice de sortie.

Plus particulièrement, l'échangeur thermique peut être un refroidisseur d'air de suralimentation pouvant être utilisé avec un moteur à combustion interne ou toutes autres applications demandant l'utilisation de deux fluides pour refroidir convenablement un flux d'air. Les premiers tubes peuvent être connectés à un circuit de refroidissement haute température comprenant un radiateur dans lequel circule un premier fluide de refroidissement moteur et, les deuxièmes tubes peuvent être connectés à un circuit de refroidissement basse température comprenant un condenseur et dans lequel circule un deuxième fluide de refroidissement.

L'échangeur thermique est de plus fixé sur une embase, soit par brasage, par vissage ou tout autre moyen. L'embase est elle-même pourvue de moyens de fixations permettant de la solidariser à un environnement extérieur tel le compartiment moteur, une conduite d'air ou le moteur.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la Figure 1 est un schéma du circuit de refroidissement de l'air de suralimentation d'un moteur turbocompressé, circuit comprenant un RAS;
- la Figure 2 est une vue en perspective du RAS de la Figure 1;
- la Figure 3 est une vue de dessus d'une plaque composant le RAS des Figures 1 et 2 ;
- la Figure 4 est une alternative de construction de la plaque de la Figure 3.
- la Figure 5 est une de dessus d'une plaque composant le RAS de la Figure 1 réalisé selon un autre mode de réalisation.
- la Figure 6 est une alternative de construction de la plaque de la Figure 5.
- la Figure 7 est une vue du RAS de la Figure 2, découpée de sorte à mettre en évidence des ailettes de refroidissement.
- la Figure 8 est similaire à la Figure 5, des perturbateurs de flux de densité variable étant pourvus sur les plaques.
- la figure 9 est similaire à la Figure 5, les orifices d'entrées et de sorties étant décalés.

### DESCRIPTION DES MODES DE REALISATION PREFERES

Dans la suite de la description, des éléments identiques ou similaires seront désignés par les mêmes références.

De manière illustrative mais non limitative, l'invention est décrite relativement à un refroidisseur d'air de suralimentation (RAS) équipant un moteur à combustion interne. Les enseignements de l'invention restent cependant parfaitement transposables à d'autres environnements que l'automobile.

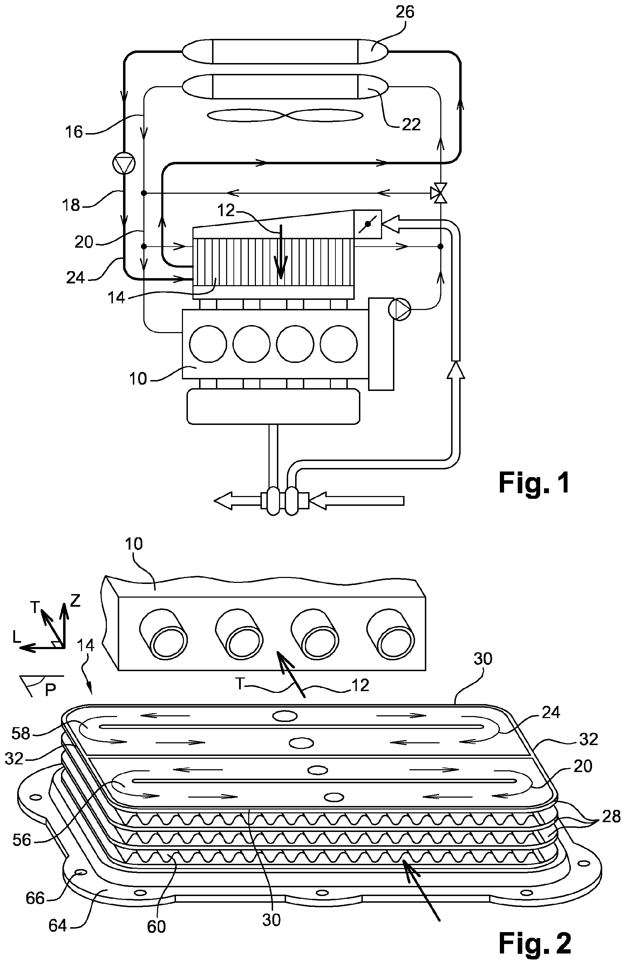

La Figure 1 est un schéma du circuit de refroidissement du moteur à combustion interne 10 d'un véhicule. Le moteur 10 est turbocompressé et est alimenté en air de suralimentation comprimé. Le flux d'air 12 chauffé par la compression traverse le RAS 14 où il est refroidi avant d'être injecté dans le moteur 10. Dans le RAS 14 passent un circuit de refroidissement haute température (HT) 16 et un circuit de refroidissement basse température (BT) 18.

Le circuit HT 16, dans lequel circule un premier fluide de refroidissement moteur 20, comprend trois tronçons connectés en parallèle. Le tronçon-avant comprend un radiateur haute température 22 agencé à l'avant du véhicule, le tronçon-moteur refroidit le moteur 10 tandis que le tronçon-RAS comprend le RAS 14.

Le circuit BT 18, dans lequel circule un deuxième fluide de refroidissement 24, est un circuit en boucle fermé qui comprend un radiateur basse température 26 agencé à l'avant du véhicule, et le RAS 14.

A l'avant du véhicule, le radiateur basse température 26 et le radiateur haute température 22 sont traversés par un flux d'air conséquence de la vitesse du véhicule ou bien créé par un ventilateur. Généralement, relativement au sens du flux d'air, le radiateur basse température 26 est situé en amont du radiateur haute température 22. Par contre, dans le RAS 14 et relativement au flux d'air de suralimentation 12 entrant dans le moteur 10, le circuit HT 16 est située en amont du circuit BT 18.

La Figure 2 est une représentation du RAS 14 orienté dans un repère triaxe orthogonal comprenant un axe longitudinal L, un axe transversal T et un axe vertical Z. Le RAS 14 est un échangeur thermique à plaques 28. La description ci-après détaille des modes de réalisation particuliers du RAS 14.

Dans un RAS le flux d'air de suralimentation est refroidit tandis que les fluides s'échauffent. Certains aspects de la réalisation sont liés à cet échange thermique. Les enseignements de l'invention sont cependant facilement transposables à des échangeurs thermiques dans lesquels le flux d'air s'échauffe tandis que les fluides se refroidissent. Les adaptations nécessaires sont indiquées dans le corps de la description.

Le RAS 14 de la Figure 2 comprend des plaques métalliques 28 rectangulaires ayant deux bords longitudinaux 30 et deux bords transversaux 32. Les plaques 28 sont substantiellement planes et sont agencées par paires. Elles définissent deux circuits de circulation indépendants l'un de l'autre. Le flux d'air de suralimentation 12 traverse le RAS 14 selon l'axe transversal T et s'écoule dans le sens de l'axe indiqué sur la Figure 2.

Préalablement à l'assemblage, les plaques 28 ont été mise en forme, par exemple par emboutissage, de sorte à chacune avoir un rebord périphérique plan 34 ainsi que deux zones Z1, Z2, en léger creux parfaitement séparées l'une de l'autre par une frontière longitudinale 36.

L'assemblage est un empilement vertical Z de paires de plaques 28 et entre les paires de plaques sont interposées des ailettes de refroidissement 60, 62. Assemblées l'une contre l'autre, rebord périphérique contre rebord périphérique, les deux zones Z1, Z2, délimitent deux espaces intérieurs formant deux tubes plats plans et coplanaires P. Dans chacune des deux zones est prévu un orifice d'entrée 38, 52, et un orifice de sortie 40, 54. Ainsi, deux fluides distincts, le premier fluide de refroidissement 20 et le deuxième fluide de refroidissement 24, peuvent chacun entrer dans un tube plat puis en ressortir sans se mélanger.

Le RAS 14 est fixé à l'ensemble moteur au moyen d'une embase intermédiaire 64 sur laquelle il est brasé ou bien vissé ou encore fixé par tout autre moyen. L'embase est elle-même pourvue de moyens de fixations 66, sur la Figure 2 sont par exemple représentés des trous de passage de vis qui permettent de fixer le RAS 14 et l'embase 64 à un autre élément de l'environnement tel le moteur ou une conduite d'air servant de support.

Il existe de nombreux arrangements possibles pour la circulation du fluide dans un échangeur thermique. On connait des échangeurs dont tous les tubes sont en parallèles les uns des autres de sorte que le fluide entre dans l'échangeur puis est distribué dans un tube avant de ressortir de l'échangeur. Il existe également des échangeurs dont les tubes plats sont agencés, au moins pour partie, en série les uns à la suite des autres. Dans ce cas, le fluide parcoure plusieurs tubes avant de ressortir de l'échangeur. Dans le but d'améliorer les échanges thermiques entre le fluide et les plaques il est également connu d'agencer des perturbateur de flux à l'intérieur même des tubes plats. L'écoulement du fluide est alors turbulent plutôt que laminaire. Ces perturbateurs de flux peuvent être rapportés comme des éléments séparés ou encore être des bossages réalisés directement dans les plaques lors de l'opération d'emboutissage par exemple. Il est également fréquent que l'assemblage définitif du RAS soit réalisé par brasage.

D'un point de vue structurel, le RAS 14 de la Figure 2, présenté de manière très générale et succincte ci-avant, intègre en une seule structure les deux circuits HT 16 et BT 18.

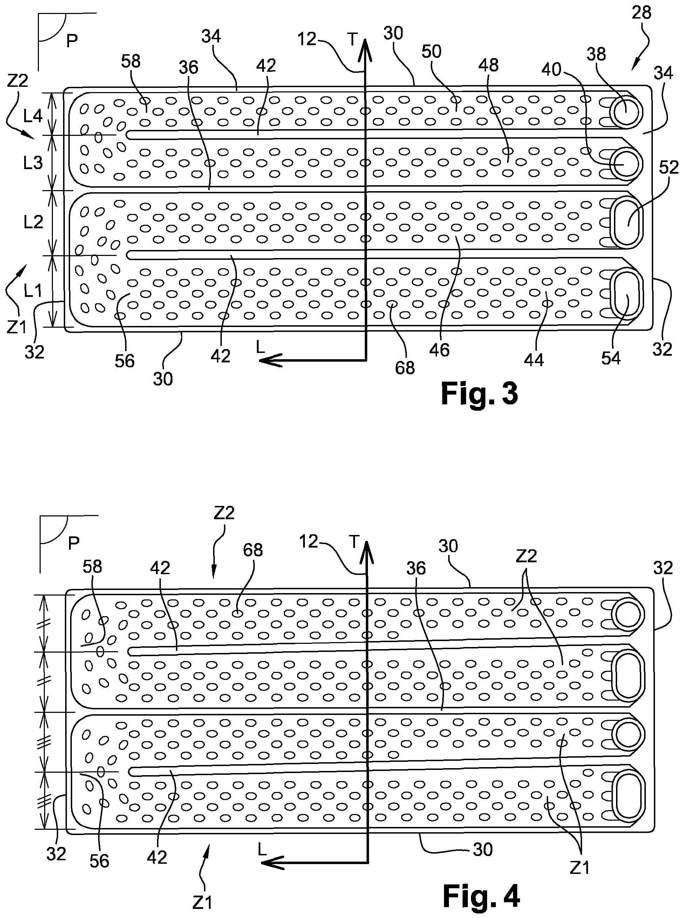

La Figure 3 illustre un premier mode de réalisation des plaques métalliques 28 du RAS 14. La plaque 28, représentée en vue de dessus, est divisée en deux par la frontière longitudinale 36 s'étendant selon l'axe longitudinal L d'un bord transversal 32 au bord opposé 32. Relativement au flux d'air de suralimentation 12 s'écoulant selon l'axe transversal T, et dans le sens d'orientation de celui-ci, les zones Z1, Z2, se repèrent en la zone amont Z1 et la zone avale Z2.

La zone amont Z1 est elle-même pourvue d'une séparation longitudinale 42 la séparant partiellement en deux branches longitudinales 44, 46, parallèles reliées par une seule de leurs extrémités. Les deux branches forment une branche amont 44 et une branche avale 46. L'orifice d'entrée 52 du fluide est agencé à l'extrémité de la branche avale 46 tandis que l'orifice de sortie 54 est agencé à l'extrémité de la branche amont 44. La branche avale 46, de largeur L2, par laquelle le fluide 20 entre froid est moins large que la branche amont 44, de largeur L1, par laquelle le même fluide 20 ressort réchauffé.

A l'instar de la zone amont Z1 décrite ci-avant, la zone avale Z2 est également pourvue d'une séparation longitudinale 42 ne la séparant que partiellement en deux branches longitudinales parallèles 48, 50, reliées à une de leurs extrémités. Les deux branches forment une branche amont 48 et une branche avale 50. L'orifice d'entrée 38 du fluide est agencé à l'extrémité de la branche avale 50 tandis que l'orifice de sortie 40 est agencé à l'extrémité de la branche amont 48. La branche avale 50, de largeur L4, par laquelle le fluide 24 entre froid est moins large que la branche amont 48, de largeur L3, par laquelle le même fluide 24 ressort réchauffé.

Tel que présenté sur la Figure 3 les quatre branches longitudinales 44-50 sont parallèles, la branche la plus en amont 44 étant la plus large et la branche la plus en aval 50 étant la plus étroite.

Dans la Figure 3, les séparations longitudinales 42 s'étendent strictement selon la direction longitudinale L, chaque branche longitudinale ayant donc une largeur constante. La Figure 4 présente une alternative dans laquelle les séparations 42 sont en léger biais par rapport à la direction longitudinale L. Chaque branche longitudinale a alors une largeur qui augmente depuis l'entrée jusqu'à la sortie. Aux extrémités des branches où se rejoignent l'aval et l'amont les branches ont sensiblement la même largeur.

Une alternative dans laquelle le port d'entrée serait en amont et le port de sortie en aval est bien sûr possible. Dans ce cas c'est la branche amont, celle par laquelle le fluide froid entre, qui devrait être la plus étroite. Cependant les branches peuvent être réalisées de même largeur notamment dans le cas de l'utilisation de fluides ne se dilatant que très peu lorsque leur température augmente.

Dans le cas de plaques à branches de largeur différentes ou de largeur évolutive, il est important de noter que les plaques montées face-à-face dans une même paire ne sont pas identiques mais symétriques. Il faut donc distinguer lors de la fabrication les plaques de dessous et les plaques de dessus.

Une fois assemblées, les plaques 28 du RAS 14 définissent le tube amont HT 56 apte à être connecté dans le circuit HT 16 et le tube aval BT 58 apte à être connecté dans le circuit BT 18. Entre les plaques 28, le premier fluide de refroidissement 20 circule dans le tube amont HT 56 en entrant par sa branche avale 46 puis en rejoignant l'orifice de sortie 54 en bout de sa branche amont 44. De même le deuxième fluide de refroidissement 24 circule dans le tube aval BT 58 en entrant par sa branche avale 50 puis en rejoignant l'orifice de sortie 40 en bout de sa branche amont 48.

De manière figurative, les tubes amont HT 56 et aval BT 58 du RAS 14 s'agencent en formant un « UU », les orifices d'entrée 38, 52, et de sortie 40, 54, étant aux extrémités libres des branches.

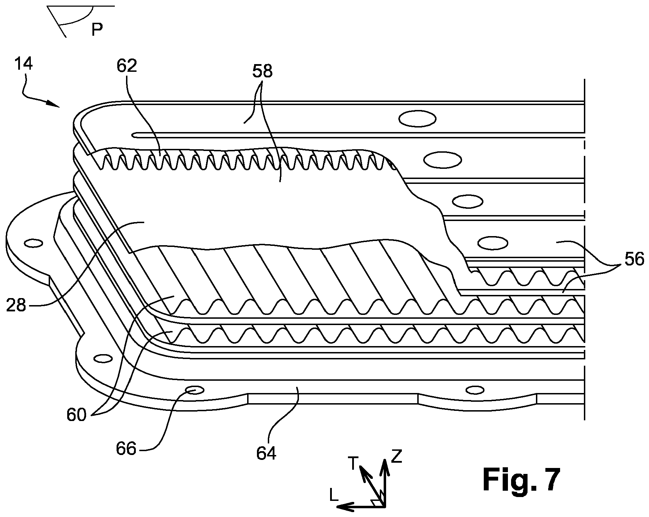

La Figure 7 illustre qu'entre les tubes plats sont placées les ailettes de refroidissement 60, 62, dont l'objet bien connu est d'améliorer l'échange thermique entre les plaques 28 et le flux d'air de suralimentation 12 traversant le RAS 14. Ces fines ailettes 60, 62, s'étendent entre les faces extérieures de plaques 28 adjacentes et sont orientées selon la direction transversale T. Relativement à la direction transversale T du flux d'air de suralimentation 12, les ailettes 60 situées en amont, entre deux tubes amont HT 56, là où le flux d'air 12 est le plus chaud, sont plus espacées les unes des autres que les ailettes 62 situées en aval entre deux tubes aval BT 58 là où le flux d'air est le plus froid.

Dans l'alternative inverse d'un échangeur thermique dans lequel le fluide se réchauffe tandis que le flux d'air traversant se refroidit, les ailettes amont sont plus serrées que les ailettes avales.

D'un point de vue fonctionnel, l'air de suralimentation 12 entre dans le RAS 14 à une température pouvant être supérieure à 200°C et en ressort à moins de 70°C pour être injecté dans le moteur 10. Dans le RAS 14, le flux d'air de suralimentation 12 est en échange thermique successif avec le tube amont HT 56, d'abord avec sa branche amont HT 44 puis avec sa branche avale HT 46, et ensuite avec le tube aval BT 58, d'abord avec sa branche amont BT 48 puis avec sa branche avale BT 50.

La chute de température de l'air de suralimentation 12 s'accompagne d'un réchauffement et d'une dilatation du premier fluide de refroidissement 20 dans le tube HT 56 et du deuxième fluide de refroidissement 24 dans le tube BT 58. Les fluides peuvent par exemple entrer en phase liquide et en ressortir, du moins partiellement, en phase gazeuse. Les différentes largeurs L1-L4 des branches des circuits compensent cette dilatation.

De même, le flux d'air de suralimentation 12 en se refroidissant subit un accroissement de sa densité justifiant que les ailettes 60 situées en amont, entre deux tubes amont HT 56, soient plus espacées les unes des autres que les ailettes 62 situées en aval entre deux tubes aval BT 58. La description se limite à deux types d'ailettes, celles en amont 60 et celles en aval 62, chacune ayant sont espacement inter-ailettes propre. Des réalisations prévoyant plus de deux types d'ailettes sont bien sûr possibles. Ainsi pourraient être agencées des ailettes en amont puis des ailettes au centre et enfin des ailettes en aval, l'espacement inter-ailettes variant à chaque fois.

D'autres arrangements de branches latérales sont également possibles. Les tubes arrangés en « UU » peuvent être tête-bêche en « UU » inversés l'un par rapport à l'autre. De même, l'un des circuits peut n'avoir qu'une seule branche longitudinale l'ensemble formant un « UI ». Enfin les ailettes de refroidissement peuvent être à espacement constant de l'amont à l'aval du RAS 14.

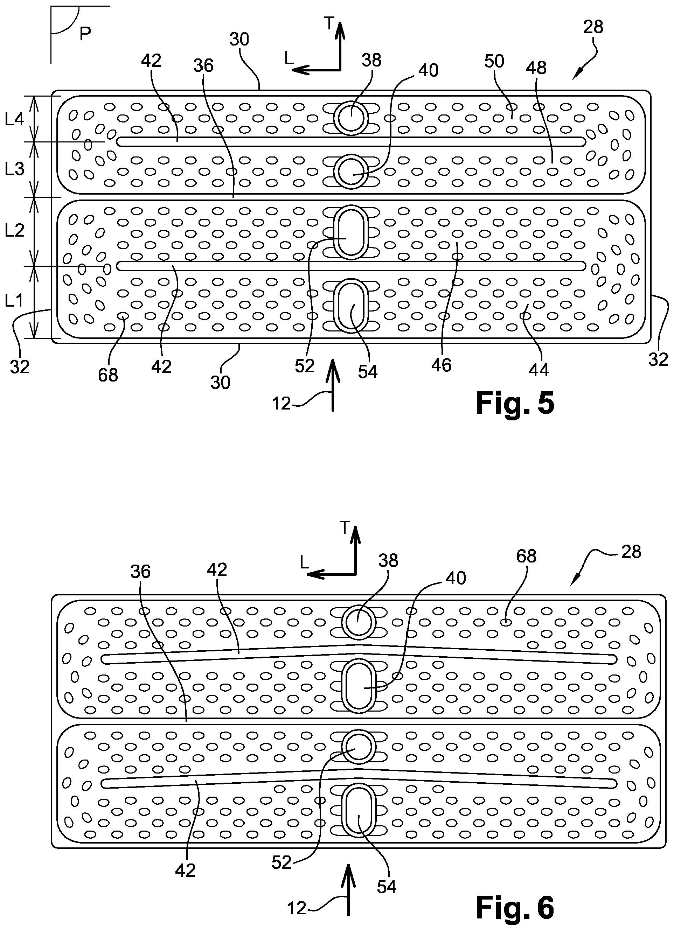

La Figure 5 illustre un second mode de réalisation qui a notamment été choisi pour le RAS 14 de la Figure 2. Dans ce second mode, la séparation longitudinale 42 entre les branches longitudinales 44, 46, du tube amont HT 56 n'atteint aucun des bords transversaux 32 de la plaque 28 et donc, les deux branches 44, 46, sont reliées par leurs deux extrémités formant une boucle fermée à deux branches longitudinales, une branche amont 44 et une branche avale 46. L'orifice d'entrée 52 est au centre de la branche avale 46 et l'orifice de sortie 54 au centre de la branche amont 44. Ainsi le premier fluide de refroidissement 20 entre dans le tube amont HT 56 au centre de sa branche avale 46 puis s'écoule en se séparant en deux demi-flux qui se rejoignent dans la branche amont 44 où est agencé l'orifice de sortie 40.

Similairement au tube amont HT 56, la séparation longitudinale 42 du tube aval BT 58 entre ses branches longitudinales 48, 50, n'atteint aucun des bords transversaux 32 et les deux branches 48, 50, sont également reliées en leurs deux extrémités formant également une boucle fermée. L'orifice d'entrée 38 est au centre de la branche avale 50 et l'orifice de sortie 40 au centre de la branche amont 48. Ainsi le deuxième fluide de refroidissement 24 entre dans le tube aval BT 58 par sa branche avale 50 puis s'écoule en se séparant en deux demi-flux qui se rejoignent ensuite dans la branche amont 48 où est agencé le port de sortie 54.

De manière figurative, le tube amont HT 56 et le tube aval BT 58 du RAS 14 forment un « 00 », les orifices d'entrée et de sortie étant agencés aux milieux des branches avales 46, 50. De manière alternative, les orifices d'entrée et de sortie d'un circuit en 0 peuvent également être agencés aux extrémités haute et basse du 0 et non plus au milieu des branches.

Tout comme précédemment, dans ce second mode de réalisation illustré par la Figure 5, la branche avale 46, de largeur L2, par laquelle le fluide 20 entre froid est moins large que la branche amont 44, de largeur L1, par laquelle le même fluide 20 ressort réchauffé et, la branche avale 50, de largeur L4, par laquelle le fluide 24 entre froid est moins large que la branche amont 48, de largeur L3, par laquelle le même fluide 24 ressort réchauffé.

Dans la Figure 5, les séparations longitudinales 42 s'étendent strictement selon la direction longitudinale L, chaque branche longitudinale ayant donc une largeur constante. La Figure 6 présente une alternative de ce second mode de construction, alternative dans laquelle les séparations 42 forment une ligne brisée ayant deux segments en léger biais par rapport à la stricte direction longitudinale L. Chaque branche longitudinale a alors une section qui évolue continument depuis un orifice d'entrée jusqu'à l'orifice de sortie. Aux extrémités des branches, où se rejoignent l'aval et l'amont, les branches ont sensiblement la même largeur.

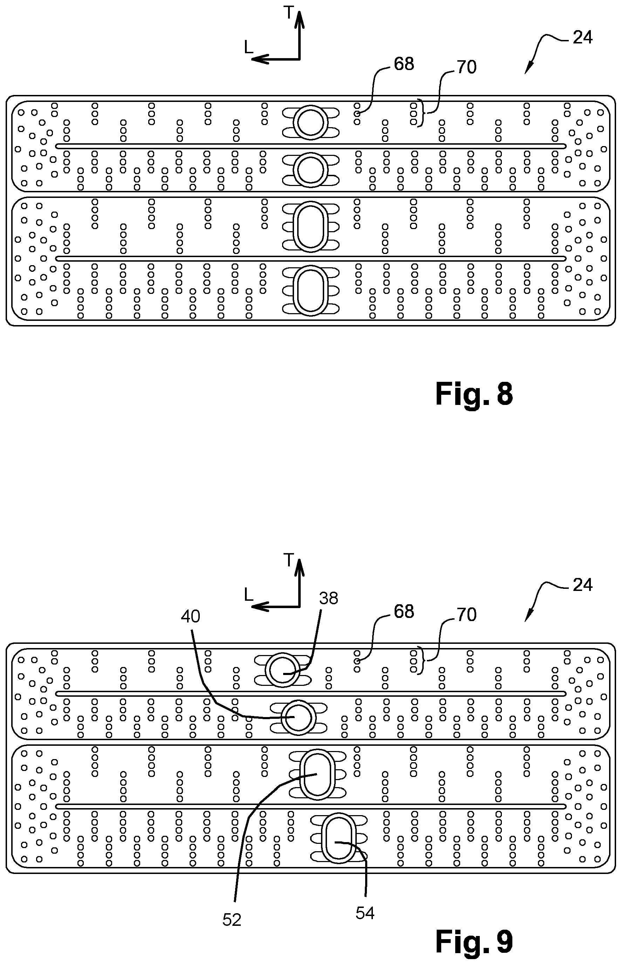

Selon les Figures 3-6, les plaques 28 sont pourvues de perturbateurs de flux 68 destinés à perturber la couche limite et à améliorer le brassage des fluides 20, 24, et donc à favoriser les échanges thermiques. Selon la Figure 8 les perturbateurs 68 sont organisés par set 70 de plusieurs perturbateurs 68. Les sets 70 forment des alignements transverses à l'écoulement du fluide créant des obstacles et obligeant le fluide à suivre un parcours en zig-zag. D'autres arrangements de perturbateurs et de set sont évidemment possibles.

De plus tel qu'observable sur la figure, les perturbateurs 68 sont plus éloignés les uns des autres à proximité des orifices d'entrée 38, 52, qu'à proximité des sorties 40, 54. Cette variation de densité des perturbateurs est liée au flux thermique qui décroit au fur et à mesure de l'écoulement des fluides le long des circuits. Sur la figure 8 se sont les sets 70 dont la densité augmente au fur et à mesure du sens de l'écoulement. Sur la figure 8, à l'intérieur d'une branche de tube plat la densité des perturbateurs est constante. Cette densité varie au changement de branche. Dans une variante non représentée la densité des perturbateurs peut varier de manière continue entre les bouches d'entrée et de sortie.

Les modes de réalisation présentées ci-avant peuvent bien sûr être combinés en réalisant des tubes HT 56 et BT 58 en une quelconque des combinaisons de U, 0, I ou autres. Le choix peut par exemple être guidé par les propriétés des fluides de circulation, par l'espace disponible, ou par le mode de connexion entre les tubes plats.

De même les orifices décalés peuvent être combinés avec la densité variable des perturbateurs.

L'agencement des Figures 5 et 6, en « 00 » avec entrées et de sorties au centre des branches longitudinales, présente au moins deux avantages. D'abord certaines architectures, au sein desquelles l'échangeur doit être agencé et connecté, ont les connections entrée-sortie de fluides centrées par rapport à l'emplacement de l'échangeur. C'est le cas de RAS équipant certains moteurs automobiles. Un échangeur dont les entrées-sorties seraient aux extrémités des plaques devraient pour pouvoir être connecté être pourvu de raccords tubulaires s'étendant depuis le centre jusqu'à l'extrémité de l'échangeur. Ces tuyaux de raccords occupent un espace non négligeable alors qu'un échangeur dont les entrées-sorties sont au centre des plaques peut être connecté directement. Les raccords, et par là même l'espace nécessaire à ceux-ci, peuvent donc être économisés et cet espace peut être utilisé pour augmenter la taille de l'échangeur, le nombre de plaques et donc le volume d'échange thermique. Ensuite, un second avantage des connections centrales est que le flux de fluide est divisé en deux moitié ce qui réduit les pertes de pression, ou pertes de charges. Les pertes de charges étant proportionnelles au carré du débit, le débit global du système peut être augmenté avec la même puissance motrice de la pompe qui génère la circulation du fluide.

Une optimisation selon l'invention est présentée en référence à la figure 9 en réalisant un décalage longitudinal L des orifices d'entrée et de sortie. Ce décalage permet d'optimiser les échanges thermiques en assurant que toute la plaque est transversalement parcourue par le flux d'air 12 en ne créant pas de zone entre les orifices, zones qui sont plus difficiles d'accès au flux d'air et dans lesquelles les fluides sont moins bien refroidis. Tels que présenté sur la figure 9 il est intéressant de conserver les orifices dans la zone centrale des circuits de sorte que les avantages ci-avant présentés soient conservés.

## Revendications

1. Echangeur thermique à plaques (14) assemblées par paires, chaque paire formant entre ses plaques (28) un premier tube plat (56) de circulation dans lequel circule un premier fluide (20) entre un premier orifice d'entrée (52) et un premier orifice de sortie (54),
chaque paire de plaques (28) formant de plus entre ses plaques (28) un deuxième tube plat (58) de circulation dans lequel circule un deuxième fluide (24) entre un deuxième orifice d'entrée (38) et un deuxième orifice de sortie (40),
les deux tubes plats (56, 58) étant coplanaires (P) et formant des branches parallèles (44, 46, 48, 50) s'étendant selon une direction longitudinale (L) du plan (P) elle-même perpendiculaire à une direction transversale (T) du plan (P) selon laquelle un flux d'air transversal (12) traverse l'échangeur thermique (14) en passant entre les paires de plaques, le premier tube (56) étant en amont dans le flux d'air (12) et le deuxième tube (58) étant en aval, le flux d'air (12) étant d'abord en échange thermique avec le premier tube (56) puis en échange thermique avec le deuxième tube (58),
au moins un des deux tubes (56, 58) de circulation ayant deux branches longitudinales parallèles (44, 46, 48, 50) reliées en leurs deux extrémités selon un 0, une des branches (44, 48) du 0 étant en amont dans le flux d'air (12), la branche amont (44, 48), et l'autre branche (46, 50) du 0 étant en aval, la branche aval (46,50), **caractérisé en ce que** l'orifice d'entrée (38, 52) d'un tube plat (56, 58) est agencé sur la branche aval (46, 50) et l'orifice de sortie (40, 54) est agencé sur la branche amont (44, 48), dans lequel les orifices d'entrée (38, 52) et de sortie (40,54) sont agencés dans la zone centrale des branches (44-50) et sont longitudinalement (L) décalés l'un par rapport à l'autre.

2. Echangeur thermique (14) selon la revendication 1, l'échangeur étant prévu pour refroidir le flux d'air transversal (T,12) tandis que le premier fluide et le deuxième fluide se réchauffent et dans lequel, mesurée dans le plan commun (P) et selon la direction transversale (T), la largeur (L1, L3) de la branche longitudinale (44, 48) dans laquelle se trouve l'orifice de sortie (40, 54) du fluide (20, 24) est plus large que la largeur (L2, L4) de la branche longitudinale (46, 50) du même tube dans laquelle se trouve l'orifice d'entrée (38, 52) du fluide.

3. Echangeur thermique (14) selon l'une quelconque des revendications précédentes, l'échangeur étant prévu pour refroidir le flux d'air transversal (T,12) tandis que le premier fluide et le deuxième fluide se réchauffent, l'échangeur comprenant au moins deux paires de plaques (28) entre lesquelles sont agencées des ailettes de refroidissements (60, 62) orientées selon la direction transversale (T), les ailettes amont (60) situées entre les premiers tubes (56), en amont dans le flux d'air (12), étant plus éloignées les unes des autres elles que les ailettes aval (62) situées entre les deuxièmes tubes (58), en aval dans le flux d'air (12).

4. Echangeur thermique (14) selon l'une des revendications 1 ou 2, l'échangeur étant prévu pour réchauffer le flux d'air transversal (T, 12) tandis que le premier fluide et le deuxième fluide se refroidissent, l'échangeur comprenant au moins deux paires de plaques (28) entre lesquelles sont agencées des ailettes de refroidissement (60, 62) orientées selon la direction transversale (T), les ailettes amont (60) situées entre les premiers tubes (56), en amont dans le flux d'air (12), étant plus proches les unes des autres que les ailettes aval (62) situées entre les deuxièmes tubes (58), en aval dans le flux d'air (12).

5. Echangeur thermique (14) selon la revendication 1 dans lequel les deux tubes plats (56, 58) ont chacun deux branches longitudinales parallèles (44, 46, 48, 50) reliées en leurs deux extrémités et forment ensemble un 00, les quatre orifices d'entrée (38, 52) et de sortie (40, 54) étant agencés dans la zone centrale des branches longitudinales (44, 46, 48, 50) en étant décalés l'un par rapport à l'autre.

6. Echangeur thermique (14) selon l'une quelconque des revendications précédentes dans lequel les tubes plats (56, 58) dans lesquels circulent les fluides (20, 24) sont pourvus de perturbateurs (68) de flux qui sont plus éloignés les uns des autres à proximité de l'orifice d'entrée (52, 38) qu'ils ne le sont à proximité de l'orifice de sortie (54, 40).

7. Echangeur thermique (14) selon la revendication 6 dans lequel la densité des perturbateurs de flux (68) le long des tubes plats (56, 58) augmente régulièrement entre l'orifice d'entrée (52, 38) et l'orifice de sortie (54, 40).

8. Echangeur thermique selon l'une quelconque des revendications 6 ou 7 dans lequel les perturbateurs de flux (68) sont groupés en set (70) de plusieurs perturbateurs (68) alignés transversalement au sens d'écoulement du fluide (20, 24).

9. Echangeur thermique selon la revendication 8 dans lequel les sets (70) sont plus éloignés les uns des autres à proximité de l'orifice d'entrée (52, 38) qu'ils ne le sont à proximité de l'orifice de sortie (54, 40).

10. Echangeur thermique (14) selon l'une quelconque des revendications précédentes dans lequel l'échangeur thermique (14) est un refroidisseur d'air de suralimentation (14), les premiers tubes (56) pouvant se connecter à un circuit de refroidissement haute température (16) comprenant un radiateur haute température (22) dans lequel circule un premier fluide de refroidissement (20) et, les deuxièmes tubes (58) pouvant se connecter à un circuit de refroidissement basse température (18) comprenant un radiateur basse température (26) et dans lequel circule un deuxième fluide de refroidissement (24).

11. Echangeur thermique (14) selon l'une quelconque des revendications précédentes l'échangeur (14) étant fixé sur une embase (64), elle-même étant pourvue de moyens de fixations (66) permettant de la solidariser à un environnement extérieur.

## Patentansprüche

1. Wärmeaustauscher (14) mit Platten, die in Paaren zusammengefügt sind, wobei jedes Paar zwischen seinen Platten (28) ein erstes Zirkulationsflachrohr (56) bildet, in dem ein erstes Fluid (20) zwischen einer ersten Eingangsöffnung (52) und einer ersten Ausgangsöffnung (54) zirkuliert,
wobei jedes Paar von Platten (28) außerdem zwischen seinen Platten (28) ein zweites Zirkulationsflachrohr (58) bildet, in dem ein zweites Fluid (24) zwischen einer zweiten Eingangsöffnung (38) und einer zweiten Ausgangsöffnung (40) zirkuliert,
wobei die Flachrohre (56, 58) koplanar (P) sind und parallele Schenkel (44, 46, 48, 50) bilden, die sich entlang einer Längsrichtung (L) der Ebene (P), die selbst zu einer Querrichtung (T) der Ebene (P) senkrecht ist, erstrecken, entlang der ein Querluftstrom (12) den Wärmeaustauscher (14) durchquert, indem er zwischen den Paar von Platten durchgeht, wobei das erste Rohr (56) stromaufwärts in dem Luftstrom (12) liegt, und das zweite Rohr (58) stromabwärts liegt, wobei der Luftstrom (12) zuerst mit dem ersten Rohr (56) in Wärmeaustausch ist, und dann mit dem zweiten Rohr (58) in Wärmeaustausch ist,
wobei mindestens eines der zwei Zirkulationsrohre (56, 58) zwei parallele Längsschenkel (44, 46, 48, 50) aufweist, die an ihren zwei Enden gemäß einer 0 verbunden sind, wobei einer der Schenkel (44, 48) der 0 stromaufwärts in dem Luftstrom (12) liegt, der stromaufwärtige Schenkel (44, 48), und der andere Schenkel (46, 50) der 0 stromabwärts liegt, der stromabwärtige Schenkel (46, 50),
**dadurch gekennzeichnet, dass** die Eingangsöffnung (38, 52) eines Flachrohrs (56, 58) auf dem stromabwärtigen Schenkel (46, 50) eingerichtet ist, und die Ausgangsöffnung (40, 54) auf dem stromaufwärtigen Schenkel (44, 48) eingerichtet ist, wobei die Eingangsöffnungen (38, 52) und Ausgangsöffnung (40, 54) in der zentralen Zone der Schenkel (44-50) eingerichtet und längs (L) voneinander versetzt sind.

2. Wärmeaustauscher (14) nach Anspruch 1, wobei der Wärmeaustauscher vorgesehen ist, um den Querluftstrom (T, 12) zu kühlen, während sich das erste Fluid und das zweite Fluid erwärmen, und wobei, in der gemeinsamen Ebene (P) und entlang der Querrichtung (T) gemessen, die Breite (L1, L3) des Längsschenkels (44, 48), in dem sich die Ausgangsöffnung (40, 54) des Fluids (20, 24) befindet, breiter ist als die Breite (L2, L4) des Längsschenkels (46, 50) desselben Rohrs, in dem sich die Eingangsöffnung (38, 52) des Fluids befindet.

3. Wärmeaustauscher (14) nach einem der vorstehenden Ansprüche, wobei der Wärmeaustauscher vorgesehen ist, um den Querluftstrom (T, 12) zu kühlen, während sich das erste Fluid und das zweite Fluid erwärmen, wobei der Wärmeaustauscher mindestens zwei Paar von Plattene (28) umfasst, zwischen welchen Kühlrippen (60, 62) eingerichtet sind, die entlang der Querrichtung (T) ausgerichtet sind, wobei die stromaufwärtigen Rippen (60), die zwischen den ersten Rohren (56) stromaufwärts in dem Luftstrom (12) liegen, weiter voneinander entfernt sind als die stromabwärtigen Rippen (62), die zwischen den zweiten Rohren (58) stromabwärts in dem Luftstrom (12) liegen.

4. Wärmeaustauscher (14) nach einem der Ansprüche 1 oder 2, wobei der Austauscher vorgesehen ist, um den Querluftstrom (T, 12) zu erwärmen, während sich das erste Fluid und das zweite Fluid abkühlen, wobei der Austauscher mindestens zwei Paar von Plattene (28) umfasst, zwischen welchen Kühlrippen (60, 62) eingerichtet sind, die entlang der Querrichtung (T) ausgerichtet sind, wobei die stromaufwärtigen Rippen (60), die zwischen den ersten Rohren (56) stromaufwärts in dem Luftstrom (12) liegen, einander näher sind als die stromabwärtigen Rippen (62), die zwischen den zweiten Rohren (58) stromabwärts in dem Luftstrom (12) liegen.

5. Wärmeaustauscher (14) nach Anspruch 1, wobei die zwei Flachrohre (56, 58) jeweils zwei parallele Längsschenkel (44, 46, 48, 50) aufweisen, die an ihren zwei Enden verbunden sind und gemeinsam eine 00 bilden, wobei die vier Eingangsöffnungen (38, 52) und Ausgangsöffnung (40, 54) in der zentralen Zone der Längsschenkel (44, 46, 48, 50) mit einem Versatz voneinander eingerichtet sind.

6. Wärmeaustauscher (14) nach einem der vorstehenden Ansprüche, wobei die Flachrohre (56, 58), in welchen die Fluide (20, 24) zirkulieren, mit Flussstörelementen (68) versehen sind, die nahe der Eingangsöffnung (52, 38) weiter voneinander beabstandet sind als sie nahe der Ausgangsöffnung (54, 40) beabstandet sind.

7. Wärmeaustauscher (14) nach Anspruch 6, wobei die Dichte der Flussstörelemente (68) entlang der Flachrohre (56, 58) regelmäßig zwischen der Eingangsöffnung (52, 38) und der Ausgangsöffnung (54, 40) zunimmt.

8. Wärmeaustauscher nach einem der Ansprüche 6 oder 7, wobei die Flussstörelemente (68) als Satz (70) aus mehreren Störelementen (68), die quer in die Fließrichtung des Fluids (20, 24) ausgerichtet sind, gruppiert sind.

9. Wärmeaustauscher nach Anspruch 8, wobei die Sätze (70) voneinander nahe der Eingangsöffnung (52, 38) weiter entfernt sind als sie nahe der Ausgangsöffnung (54, 40) entfernt sind.

10. Wärmeaustauscher (14) nach einem der vorstehenden Ansprüche, wobei der Wärmeaustauscher (14) ein Ladeluftkühler (14) ist, wobei sich die ersten Rohre (56) mit einem Hochtemperaturkühlkreislauf (16) verbinden können, der einen Hochtemperaturkühler (22) umfasst, in dem ein erstes Kühlfluid (20) zirkuliert, und sich die zwei Rohre (58) mit einem Niedertemperaturkühlkreislauf (18) verbinden können, der einen Niedertemperaturkühler (26) umfasst, in dem ein zweites Kühlfluid (24) zirkuliert.

11. Wärmeaustauscher (14) nach einem der vorstehenden Ansprüche, wobei der Wärmeaustauscher (14) auf einer Grundplatte (64) befestigt ist, die selbst mit Befestigungsmitteln (66) versehen ist, die es erlauben, sie mit einer äußeren Umgebung fest zu verbinden.

## Claims

1. Plate heat exchanger (14) assembled in pairs, with each pair forming between its plates (28) a first flat flow tube (56) into which a first fluid (20) flows between a first inlet (52) and a first outlet (54),
each pair of plates (28) forming in addition between its plates (28) a second flat flow tube (58) into which a second fluid (24) flows between a second inlet (38) and a second outlet (40),
the two flat tubes (56, 58) being coplanar (P) and forming parallel branches (44, 46, 48, 50) extending along a longitudinal direction (L) from the plane (P) itself perpendicular to a transversal direction (T) of the plane (P) according to which a transverse air flow (12) that passes through the heat exchanger (14) by passing between the pairs of plates, the first tube (56) being upstream in the air flow (12) and the second tube (58) being downstream, with the air flow (12) being first in heat exchange with the first tube (56) then in heat exchange with the second tube (58),
at least one of the two flow tubes (56, 58) having two parallel longitudinal branches (44, 46, 48, 50) connected in their two ends according to a 0, with one of the branches (44, 48) of the 0 being upstream in the air flow (12), the upstream branch (44, 48), and the other branch (46, 50) of the 0 being downstream, the downstream branch (46, 50),
**characterised in that** the inlet (38, 52) of a flat tube (56, 58) is arranged on the downstream branch (46, 50) and the outlet (40, 54) is arranged on the upstream branch (44, 48), wherein the inlets (38, 52) and outlets (40, 54) are arranged in the central zone of the branches (44-50) and are longitudinally (L) offset in relation to one another.

2. Heat exchanger (14) according to claim 1, with the exchanger being provided to cool the transverse air flow (T, 12) while the first fluid and the second fluid are heated and in which, measured in the common plane (P) and along the transverse direction (T), the width (L1, L3) of the longitudinal branch (44, 48) in which is the outlet (40, 54) of the fluid (20, 24) is wider than the width (L2, L4) of the longitudinal branch (46, 50) of the same tube in which is the inlet (38, 52) of the fluid.

3. Heat exchanger (14) according to any of the preceding claims, the exchanger being provided to cool the transverse air flow (T, 12) while the first fluid and the second fluid are heated, with the exchanger comprising at least two pairs of plates (28) between which are arranged cooling fins (60, 62) oriented in the transverse direction (T), with the upstream fin (60) located between the first tubes (56), upstream in the air flow (12), being further apart from one another than the downstream fins (62) located between the two tubes (58), downstream in the air flow (12).

4. Heat exchanger (14) according to any of claims 1 or 2, with the exchanger being provided to heat the transverse air flow (T, 12) while the first fluid and the second fluid are cooled, with the exchanger comprising at least two pairs of plates (28) between which are arranged cooling fins (60, 62) oriented according to a transverse direction (T), with the upstream fins (60) located between the first tubes (56), upstream in the air flow (12), being closer to one another than the downstream fins (62) located between the second tubes (58), downstream in the air flow (12).

5. Heat exchanger (14) according to claim 1 wherein the two flat tubes (56, 58) each have two parallel longitudinal branches (44, 46, 48, 50) connected at their two ends and form together a 00, with the four inlets (38, 52) and outlets (40, 54) being arranged in the central zone of the longitudinal branches (44, 46, 48, 50) by being offset in relation to one another.

6. Heat exchanger (14) according to any of the preceding claims, in which the flat tubes (56, 58) into which the fluids (20, 24) flow are provided with flow disruptors (68) which are farther apart from one another in the vicinity of the inlet (52, 38) than they are in the vicinity of the outlet (54, 40).

7. Heat exchanger (14) according to claim 6 wherein the density of the flow disruptors (68) along flat tubes (56, 58) regularly increases between the inlet (52, 38) and the outlet (54, 40).

8. Heat exchanger according to any of claims 6 or 7 wherein the flow disruptors (68) are grouped into a set (70) of several disruptors (68) aligned transversely in the direction of the flow of the fluid (20, 24).

9. Heat exchanger according to claim 8 wherein the sets (70) are farther apart from one another in the vicinity of the inlet (52, 38) than they are in the vicinity of the outlet (54, 40).

10. Heat exchanger (14) according to any of the preceding claims, wherein the heat exchanger (14) is a supercharge air cooler (14), with the first tubes (56) able to connect to a high-temperature cooling circuit (16) comprising a high-temperature radiator (22) in which flow a first coolant (20) and, the second tubes (58) able to be connected to a low-temperature cooling circuit (18) comprising a low-temperature radiator (26) and in which a second coolant (24) flows.

11. Heat exchanger (14) according to any of the preceding claims, with the exchanger (14) being fastened on a base (64), which is itself provided with means of fastening (66) making it possible to fasten it to an external environment.
